Europäisches Patentamt

European Patent Office

Office européen des brevets

(19)

(11) Veröffentlichungsnummer: **0 057 383**
**A1**

(12) # EUROPÄISCHE PATENTANMELDUNG

(21) Anmeldenummer: 82100403.3

(22) Anmeldetag: 21.01.82

(51) Int. Cl.³: **C 22 B 15/12,** B 22 F 9/24,
B 01 J 23/72

(30) Priorität: 31.01.81 DE 3103328

(43) Veröffentlichungstag der Anmeldung: **11.08.82**
**Patentblatt 82/32**

(84) Benannte Vertragsstaaten: **BE DE FR GB**

(71) Anmelder: **BAYER AG, Zentralbereich Patente, Marken**
**und Lizenzen, D-5090 Leverkusen 1, Bayerwerk (DE)**

(72) Erfinder: **Maas, Joachim, Dr., Otto-Hahn-Strasse 25,**
**D-5010 Bergheim (DE)**
Erfinder: **Pflugmacher, Ingo, Dr., Asternstrasse 16,**
**D-4005 Meerbusch 3 (DE)**
Erfinder: **Rademachers, Jakob, Dr.,**
**Hoeninghausstrasse 34, D-4150 Krefeld 12 (DE)**
Erfinder: **Moretto, Hans-Heinrich, Dr., Formesstrasse 13,**
**D-5000 Koeln 80 (DE)**

(54) Verfahren zur Herstellung von Kupferpulvern mit hoher Oberfläche.

(57) Die vorliegende Erfindung betrifft ein Verfahren zur Herstellung von feinkörnigen Kupferpulvern mit hohen BET-Oberflächen durch Zementation, wobei

a) als Zementationsmittels zerkleinertes, überwiegend eisenhaltiges Gußmaterial verwendet wird,

b) die Gußteile ständig gegeneinander und/oder gegen die kupferhaltige Zementationslösung bewegt werden und

c) das Rohzementat anschließend mit Säure nachgelaugt wird.

EP 0 057 383 A1

0057383

BAYER AKTIENGESELLSCHAFT     5090 Leverkusen, Bayerwerk

Zentralbereich
Patente, Marken und Lizenzen  Br/Kü-c     30.Januar 1981


Verfahren zur Herstellung von Kupferpulvern mit hoher
Oberfläche
_____

Die vorliegende Erfindung betrifft ein Verfahren zur
Herstellung von feinkörnigen Kupferpulvern mit hoher
Oberfläche.

Diese Kupferpulver können z.B. als Katalysatoren verwendet werden. Großtechnisch interessant ist z.B.
der Einsatz von Kupferpulvern als Katalysatoren bei
der Herstellung von Methylchlorsilanen.

Die kupferhaltigen Katalysatoren müssen eine hohe
Oberfläche aufweisen, um eine große Aktivität in der
zu katalysierenden Reaktion zu entfalten. Eine hohe
Oberfläche wird nicht nur durch Verkleinerung der
Cu-Partikeldurchmesser erreicht, sondern wird ebenso durch ein hohes Porenvolumen dieser Teilchen
verursacht.

Diese Oberfläche kann als BET-Oberfläche (nach Brunauer,
Emmet und Teller) angegeben werden. Eine große BET-
Oberfläche bedeutet bei der zu katalysierenden

Le A 20 639 - Ausland

Reaktion große Raum-Zeit-Ausbeuten und einen geringen Katalysatorverbrauch.

Die Kupferpulver werden im allgemeinen durch mechanische Zerkleinerung von Kupfer, durch Elektrolyse einer Kupfersalzlösung, Verdüsen einer Kupferschmelze oder auch durch Reduktion entsprechender Cu-Verbindungen durch geeignete Reduktionsmittel wie z.B. Dithionit, $SO_2$, CO oder $H_2$ hergestellt.

Die erwähnten Verfahren liefern aber nicht die feinkörnigen Kupferpulver mit hoher Oberfläche und geeigneter poröser Kornform.

Ein Weg zur Herstellung von Kupferpulvern ist die sogenannte Zementation von Kupfer.

Die US-Patentschrift 2 083 031 beschreibt ein Verfahren zur Kupferzementation. Als Zementationsmittel wird ein zerkleinertes Eisen ohne nähere Angaben über dessen Provenienz und die damit erzeugten Cu-Oberflächen eingesetzt.

Die britische Patentschrift 1 201 466 erwähnt ein Verfahren zur Erzeugung eines für Katalysezwecke geeigneten Zementkupfers. Der nach diesem Verfahren erhaltene Katalysator weist nur geringe Oberflächen auf.

Le A 20 639

0057383

- 3 -

Nach DE-OS 2 214 611, DE-OS 2 457 660 bzw. DE-OS 2 602 849 lassen sich ebenfalls keine Kupferpulver erzeugen, die die gewünschten hohen BET-Oberflächen besitzen.

Auch die einschlägige Fachliteratur (Fisher, W. W. und Groves. R. D., 1973. U. S. Bur. Mines Dept. Invest. 7761, pp. 1 - 23; V. Annamalai and L. E. Murr, Hydrometallurgy, 4 (1979) 57 - 82; M. Esna - Ashari et al, Erzmetall Bd. 30 (1977), Se. 262 - 266; A. K. Biswas et al, Trans. Inst. Min. Met 82 (1973), Heft 802 C 127 - C 131; J. G. Reid et al, Trans. Inst. Min. Met. 82 (1973), Heft 805 (1973) C 221 - 224; A. K. Biswas. Proc. Aust. Min. Met., No. 242, (1972) S. 37 - 45; H. O. Hoffmann - Hayward, The Metallurgy of Copper, New York 1924; S. 287. A. J. Caddick, Met. Ind. London 44 (1934) 366/8, 437/9; R. M. Nadkarni et al, Transact. Met. Soc. AIME, 239 (1967) 581 - 5) läßt nicht erkennen, wie Cu-Pulver mit hohen Oberflächen erzeugt werden können.

Gegenstand der Erfindung ist nun ein Verfahren zur Herstellung von pulverförmigen Kupferpulvern mit hoher Oberfläche aus kupferhaltigen wässrigen Lösungen durch Zementation, welches dadurch gekennzeichnet ist, daß

    a)   als Zementationsmittel zerkleinertes, überwiegend eisenhaltiges Gußmaterial verwendet wird

Le A 20 639

b) die Gußteile ständig gegeneinander und/oder gegen die kupferhaltige Zementationslösung bewegt werden

c) das Rohzementat anschließend mit Säure nachgelaugt wird.

Überraschenderweise stellte sich heraus, daß bei der erfindungsgemäßen Durchführung des Verfahrens ein Kupferpulver erzeugt wird, dessen BET-Oberfläche wesentlich höher ist als die der mit anderen Zementationsverfahren hergestellten Cu-Pulver.

Die erwähnten Oberflächen werden erst durch die Kombination der unter a) bis c) aufgeführten Maßnahmen erreicht.

Eine Maßnahme allein führt nicht zum gewünschten Ergebnis.

Mit Gußeisen lassen sich Cu-Pulver erhalten, deren Oberflächen wesentlich größer sind als die bei Einsatz anderer Eisen- oder Stahlqualitäten oder auch dem Zink (als Pulver oder Blech) erzeugten Oberflächen. Die BET-Oberflächen, die nach dem erfindungsgemäßen Verfahren erzielbar sind liegen zwischen 10 m²/g und 100 m²/g.

Das Zementationsmittel kann in kleinstückiger Form mit Abmessungen im Milli- bis Zentimeterbereich vorliegen. Gut verwendbar sind mechanisch beanspruchte Gußteile wie z.B. Gußspäne oder andere Gußabfälle.

Le A 20 639

Eine mechanische Aktivierung (z.B. Kaltverformung des Stahlgefüges) von anderen Eisen- und Stahlsorten, die als Präzipitationsmittel in Frage kommen, erzeugt jedoch keine derartig großen BET-Oberflächen.

Eine u. U. notwendige Entfettung des Zementationsmittels kann mit Lösungsmitteln wie Aceton, Toluol u. ä. oder aber auch mit handelsüblichen Entfettungsmitteln vorgenommen werden. Das erfindungsgemäße Verfahren wird im allgemeinen bei Temperaturen zwischen 0 und 100°C, vorzugsweise bei 20 - 70°C durchgeführt.

Die Cu-Fällung erfolgt bevorzugt aus saurer Lösung. Üblicherweise werden Schwefel- oder Salzsäure eingesetzt, jedoch können auch andere Säuren verwendet werden.

Der Gehalt an Säure sollte nicht unter 10 g/l und nicht über 200 g/l liegen. Sehr niedrige Säurekonzentrationen bewirken eine Verminderung der Cu-Oberfläche. Der empfohlene Arbeitsbereich liegt zwischen ca. 50 und 150 g/l $H_2SO_4$ bzw. 30 - 100 g/l HCl. Die Kupferkonzentration in den Zementationslaugen sollte etwa 0,1 bis 60 g/l, vorzugsweise 0,5 bis 20 g/l betragen. Sehr hohe Cu-Ionenkonzentrationen können einen negativen Einfluß auf die erreichbare BET-Oberfläche ausüben.

Le A 20 639

Eine Bewegung des Zementationsmittels während der Zementation gegenüber der kupferhaltigen Lösung ist notwendig. Die Bewegung der Reakionspartner kann z.B. durch Drehen einer mit Lösung und Zementationsmittel beschickten Fälltrommel oder Kugelmühle erfolgen. Auch ist es möglich, das Zementationsmittel in eine mit Öffnungen versehene Trommel einzubringen, die in eine saure $CuSO_4$-Lösung taucht. Bei Drehen der Trommel verlassen die abgeschiedenen Cu-Partikel diese durch die Öffnungen und fallen auf den Boden des $CuSO_4$-Vorratsbehälters, von wo aus sie abgezogen werden können.

Die Zementation kann auch in einer Schwingmühle durchgeführt werden.

Der Zementationsprozeß kann so erfolgen, daß er entweder diskontinuierlich abläuft, oder kontinuierlich in Bezug auf die Zugabe der sauren $CuSO_4$-Lösung ist oder aber sowohl die Einbringung der Lösung wie auch des Zementationsmittels kontinuierlich erfolgt.

Die sich dem Fällprozeß anschließende Säurelaugung des Rohzementates bewirkt eine überraschend starke Oberflächenvergrößerung des Cu-Pulvers, die durch das Herauslösen der Fe-Verunreinigungen und die dadurch bedingte geringe Erhöhung der Oberfläche nicht zu erklären ist (BET des eingesetzten Graugusses gleich $< 0,1$ m²/g).

Le A 20 639

Der Laugeprozeß erfolgt mit verdünnter Schwefelsäure einer Konzentration, wie sie für die Zementation eingestellt wurde; jedoch können auch Schwefelsäuren davon abweichender Konzentrationen oder andere Säuren, wie z.B. Salzsäure, benutzt werden. Die Temperatur soll zwischen 0 und 100°C, geeigneterweise zwischen 20 und 80°C liegen.

Die aus dem Zementationsaggregat austretende, noch säurehaltige Cu-Dispersion wird in einem Rührbehälter gesammelt und hier evtl. nach Zusatz von Säure mindestens so lange nachgerührt, bis der Fe-Gehalt des Cu unter 0,5 % liegt. Ein darüber hinaus erfolgendes weiteres Rühren läßt bei dem erfindungsgemäßen Verfahren die Cu-Oberflächen noch weiter ansteigen.

Die noch säurehaltige Cu-Dispersion wird auf eine Filtriervorrichtung gepumpt, mit Wasser säurefrei gewaschen und anschließend der erhaltene nasse Filterkuchen unter Schutzgas oder im Vakuum getrocknet.

Die Oberfläche des Cu-Pulvers wurde als BET-Oberfläche durch Ar-Adsorption bei Temperaturen des flüssigen Stickstoffs nach der Ein-Punkt-Methode vermessen. Vorher wird im Hochvakuum 30 Minuten bei 300°C ausgeheizt.

Anhand der folgenden Beispiele soll das erfindungsgemäße Verfahren näher erläutert werden.

0057383

Gemäß Beispiel 1 lassen sich Kupferpulver erzeugen, die eine ca. zehnmal größere Oberfläche als die nach herkömmlichen Methoden erhaltenen Zementate aufweisen.

Das erfindungsgemäße Verfahren gemäß Beispiel 1 liefert auch ohne das anschließende Nachlaugen schon eine wesentlich höhere Kupferoberfläche als üblich, die während des Säurelaugeprozesses noch auf das mehr als Dreifache des Ausgangswertes ansteigt.

Bei Verwendung üblicher Stahldrehspäne werden ohne Nachlaugen Kupferpulver mit einer Oberfläche erhalten, die nur ca. ein Drittel der des erfindungsgemäßen Verfahrens beträgt. Die Säurelaugung ändert die BET-Oberfläche nicht signifikant.

Le A 20 639

Beispiel 1

Das untere Rohr einer gummierten Schwingmühle (Palla 35 U der Firma KHD, Köln) wird mit 135 1 Steatitkugeln (⌀ 10 - 30 mm) und mit 75 kg Graugußdrehspänen gefüllt. Die Abmessungen der Späne liegen zwischen ca. 5 und 25 mm, BET < 0,1 $m^2/g$. Vor Einsatz wurden sie dreimal mit einer 3 %igen Lösung eines handelsüblichen Entfettungsmittels gewaschen.

Das Mahlrohr wird ablaufseitig mit einer Lochplatte aus Polypropylen (⌀ der Öffnungen 3 mm) verschlossen, um ein Durchtreten des Graugußes zu verhindern.

Das obere und das untere Mahlrohr der Mühle sind durch ein Rohr verbunden. Die Mahlrohre werden nach Einschalten der Mühle über einen flexiblen Schlauch mit 2 $m^3/h$ einer sauren $CuSO_4$-Lösung beschickt, die 10,3 g/l Cu als $CuSO_4$ und 93 g/l $H_2SO_4$ enthält. Die Schwingmühle wird mit einem Schwingkreisdurchmesser von ca. 10 mm bei ca. 960 UpM erregt.

Die nach Durchtritt durch die Mühle entkupferte Lösung trägt die Kupferpartikel durch die Polypropylen-Lochplatte und einen Stutzen am Ende des zweiten Mahlrohres über einen flexiblen Schlauch und eine Polypropylenleitung in einem gummierten 10 $m^3$-Rührbehälter aus. Die entkupferte Lösung enthält noch ca. 0,5 g/l Cu und 83 g/l $H_2SO_4$. Wegen der bei der Reaktion un-

Le A 20 639

vermeidlichen Wasserstoffbildung werden sämtliche Anlagenteile, in denen mit $H_2$-Entwicklung zu rechnen ist, mit Stickstoff gespült. Die saure $CuSO_4$-Lösung erwärmt sich während der Mühlenpassage von 30°C auf 41°C.

Nach 100 Minuten ist der Versuch beendet, was am Durchbruch der blauen $CuSO_4$-Lösung aufgrund des verbrauchten Graugusses sichtbar ist.

Im direkt beheizbaren Rührbehälter wird anschließend 10 Stunden bei 50°C nachgerührt.

Hierbei verändern sich BET-Oberfläche und Fe-Gehalt des Kupfers wie folgt:

Probenahme

| nach Stunden | 0* | 1 | 2 | 3 | 4 | 5 | 6 | 7 | 8 | 9 | 10 |
|---|---|---|---|---|---|---|---|---|---|---|---|
| BET $[m^2/g]$ | 5,7 | 5,2 | 6,4 | 6,9 | 9,8 | 10,9 | 14,0 | 15,6 | 16,5 | 16,7 | 18,2 |
| Fe-Gehalt $[Gew-\%]$ | 10,7 | 10,2 | 10,0 | 8,7 | 8,3 | 3,1 | 1,4 | 0,5 | <0,5 | <0,5 | <0,5 |

* Stunde 0 entspricht Rührbeginn

Nach 10 h wird die Cu-Dispersion auf eine Kammerfilterpresse gedrückt und das Zementat mit Wasser säurefrei

Le A 20 639

gewaschen. Die Trocknung des Kupferpulvers erfolgt im Vakuumschaufeltrockner (12 h, 100°C, 20 Torr).

Die Kupferausbeute beträgt 32,6 kg, d. h. 95,1 %.

## Vergleichsbeispiel 2

In die im Beispiel 1 beschriebene Versuchsanlage werden statt der Graugußdrehspäne 75 kg Drehspäne eines Stahlgemisches der Qualitäten C 15, C 22, C 35, C 45 und C 60 gefüllt. Die Abmessungen der Späne liegen zwischen ca. 6 und 23 mm, BET 0,1 $m^2$/g. Vor Einsatz wurden sie dreimal mit einer 3 %igen Lösung eines handelsüblichen Entfettungsmittels gewaschen.

Die Mahlrohre werden nach Einschalten der Mühle mit 2 $m^3$/h einer sauren $CuSO_4$-Lösung beschickt, die 13,0 g/l Cu als $CuSO_4$ und 86,2 g/l $H_2SO_4$ enthält. Die Schwingmühle wird wie in Beispiel 1 mit 960 UpM erregt, die entkupferte Lösung und das abgeschiedene Zementat werden in dem 10 $m^3$-Rührbehälter gesammelt.

Die entkupferte Lösung enthält ca. 0,5 g/l Cu und 81,2 g /l $H_2SO_4$. Bei der Mühlenpassage erwärmt sich die Lösung von 29°C auf 43°C.

Der Versuch ist nach 120 Minuten beendet. Im Rührbehälter wird anschließend 10 Stunden bei 50°C nachgerührt.

Le A 20 639

Hierbei verändert sich die BET-Oberfläche nicht signifikant.

Probenahme

| nach Stunden | 0* | 1 | 2 | 3 | 4 | 5 | 6 | 7 | 8 | 9 | 10 |
|---|---|---|---|---|---|---|---|---|---|---|---|
| BET $[m^2/g]$ | 2,0 | 1,7 | 1,8 | 2,5 | 2,5 | 2,3 | 1,9 | 1,7 | 1,6 | 2,0 | 1,6 |
| Fe-Gehalt $[Gew.-\%]$ | | 3,5 | 2,1 | 1,4 | <0,5 | <0,5 | <0,5 | <0,5 | <0,5 | <0,5 | <0,5 |

* Stunde 0 entspricht Rührbeginn

Die weitere Aufarbeitung des Zementates erfolgt wie in Beispiel 1.

Die Kupferausbeute beträgt 48 kg, d. h. 92,4 % der Theorie.

Le A 20 639

0057383

- 13 -

Patentansprüche

1. Verfahren zur Herstellung von feinkörnigen Kupferpulvern mit hohen BET-Oberflächen durch Zementation,
dadurch gekennzeichnet, daß

    a) als Zementationsmittel zerkleinertes,
       überwiegend eisenhaltiges Gußmaterial
       verwendet wird,

    b) die Gußteile ständig gegeneinander und/
       oder gegen die kupferhaltige Zementationslösung bewegt werden und

    c) das Rohzementat anschließend mit Säure
       nachgelaugt wird.

2. Verfahren nach Anspruch 1, dadurch gekennzeichnet, daß Grauguß eingesetzt wird.

3. Verfahren nach Anspruch 1 oder 2, dadurch gekennzeichnet, daß Graugußspäne eingesetzt werden.

4. Verfahren nach einem der Ansprüche 1 bis 3, dadurch gekennzeichnet, daß die Zementation in
einer rotierenden Fälltrommel oder in einer
Schwingmühle erfolgt.

5. Verfahren nach einem der Ansprüche 1 bis 4, dadurch gekennzeichnet, daß die Zementation in

Le A 20 639

schwefelsaurer Lösung erfolgt und zur Nachlaugung Schwefelsäure verwendet wird.

6) Feinkörniges Kupferpulver mit einer Oberfläche von 10 m²/g bis 100 m²/g (gemessen nach BET), erhältlich nach einem Verfahren gemäß einem der Ansprüche 1 - 5.

7) Verwendung der nach einem der Ansprüche 1 bis 5 erhältlichen Kupferpulver als Katalysator.

8) Verwendung gemäß Anspruch 7 bei der Rochow-Synthese.

Le A 20 639

Europäisches
Patentamt

**EUROPÄISCHER RECHERCHENBERICHT**

005738?

Nummer der Anmeldung

EP 82 10 0403.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE - A - 2 245 612 (CIA DE ACERO DEL PACIFICO) <br> * Seite 20 * <br> -- | 1 |
| Y,D | DE - A1 - 2 457 660 (KLÖCKNER-HUMBOLDT-DEUTZ) <br> * Seite 8 * <br> -- | 1 |
| Y | DD - A - 21 380 (G. SEITZ et al.) <br> * Spalte 4 * <br> -- | 1 |
| A | DE - A1 - 2 811 853 (BAYER) <br> * Seite 23 * <br> -- | |
| A | US - A - 2 070 134 (H.E. KEYES) <br> -- | |
| A | US - A - 3 282 675 (W.H. PARKER) <br> -- | |
| A,D | DE - A - 2 214 611 (BAYER) <br> -- | |
| A,D | DE - B1 - 2 602 849 (KLÖCKNER-HUMBOLDT-DEUTZ) <br> -- | |
| A,D | GB - A - 1 201 466 (MIDLAND SILICONES) <br> -- | |
| A,D | US - A - 2 083 031 (F.W. MacLENNAN) <br> ---- | |

**KLASSIFIKATION DER ANMELDUNG (Int. Cl.¹)**

C 22 B 15/12

B 22 F 9/24

B 01 J 23/72

**RECHERCHIERTE SACHGEBIETE (Int. Cl.³)**

C 22 B 15/12

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 30-04-1982 | SUTOR |

EPA form 1503.1 06.78